# EUROPÄISCHE PATENTSCHRIFT

(11) **EP 1 878 549 B1**
(45) Veröffentlichungstag und Bekanntmachung des Hinweises auf die Patenterteilung: **13.05.2009**
(21) Anmeldenummer: 06014464.9
(22) Anmeldetag: 12.07.2006
(51) Int. Cl.: B27C 3/04, B23B 31/107, B23B 31/10, B23Q 3/155, B23B 39/16

(54) **Spindeleinheit**
Spindle unit
Unité de broche

(43) Veröffentlichungstag der Anmeldung: 16.01.2008
(73) Patentinhaber: Weeke Bohrsysteme GmbH, 33442 Herzebrock-Clarholz (DE)
(72) Erfinder: Voss, Hugo, 33449 Langenberg (DE); Kortenjan, Peter, 33442 Herzebrock-Clarholz (DE)
(74) Vertreter: HOFFMANN EITLE

(56) Entgegenhaltungen:
- WO-A-20/05097382
- DE-U1- 20 302 387

## Beschreibung

### Technisches Gebiet

Die Erfindung betrifft eine Bearbeitungsvorrichtung gemäß dem Oberbegriff des Anspruchs 1, welche aus der DE 203 02 387 U1 bekannt ist. Die Bearbeitungsvorrichtung umfasst Spindeleinheiten zur ein- und auswechselbaren Aufnahme von Werkzeugen zur Bearbeitung von Werkstücken, die im wesentlichen aus Holz, Holzwerkstoffen oder dergleichen bestehen, mit einem Spindelkopf zur Aufnahme eines Werkzeugs, der dazu ausgelegt ist, um eine Längsachse herum angetrieben zu werden und einen inneren Hohlraum mit einer Einführöffnung aufweist, die in Richtung der Längsachse angeordnet ist.

### Stand der Technik

Spindeleinheiten der eingangs genannten Art werden im Bereich der Holzbearbeitungsmaschinen verbreitet eingesetzt. Dabei müssen die in die Spindeleinheiten ein- und auswechselbaren Werkzeuge im eingewechselten Zustand sowohl in Drehrichtung als auch in Längsrichtung gehalten werden. So offenbart beispielsweise die DE 203 02 387 Ul eine Spindeleinheit der eingangs genannten Art, bei der die Werkzeuge in Drehrichtung durch einen Freilauf und in Längsrichtung durch Stifte oder Kugeln, die in Vertiefungen am dem Werkzeug eingreifen, gehalten werden.

Allerdings hat sich gezeigt, dass die bekannten Spindeleinheiten insbesondere bei hohen Drehzahlen einen hohen Verschleiß aufweisen und das Ein- und Auswechseln der Werkzeuge aufgrund der erforderlichen Ausrichtung von Verriegelungsstiften und -vertiefungen bisweilen schwierig ist.

WO 2005/097 382 A1 offenbart eine Spindeleinheit mit magnetischen Haltemitteln.

### Darstellung der Erfindung

Es ist daher Aufgabe der vorliegenden Erfindung, eine Bearbeitungsvorrichtung mit Spindeleinheiten der eingangs genannten Art bereitzustellen, wobei eine Spindeleinheit einen geringen Verschleiß aufweist und ein einfaches Ein- und Auswechseln von Werkzeugen ermöglicht.

Diese Aufgabe wird erfindungsgemäß durch eine Bearbeitungsvorrichtung mit den Merkmalen von Anspruch 1 gelöst. Vorteilhafte Weiterbildungen der Erfindung sind in den abhängigen Ansprüchen angegeben.

Gemäß einer Zielrichtung stellt die vorliegende Erfindung eine Bearbeitungsvorrichtung zur Bearbeitung von Werkstücken, die im Wesentlichen aus Holz, Holzwerkstoffen oder dergleichen bestehen, bereit. Die Bearbeitungsvorrichtung umfasst Spindeleinheiten sowie en Werkzeugmagazin, mittels dessen Werkzeuge automatisch in die Spindeleinheit ein- und auswechselbar sind. Dabei ist erfindungsgemäß vorgesehen, dass das Werkzeugmagazin mindestens eine Reihe mit linear angeordneten Werkzeugaufnahmen besitzt.

Um ein zügiges und störungsfreies Ein- und Auswechseln der Bearbeitungswerkzeuge zu ermöglichen, ist gemäß der vorliegenden Erfindung ferner vorgesehen, dass die Werkzeugaufnahmen im Wesentlichen parallel zur Achse der zu haltenden Werkzeuge verfahrbar sind. Hierdurch können die betreffenden Werkzeugaufnahmen gezielt in eine Wechselposition gefahren werden, in der bereits eingewechselte Werkzeuge nicht mit deren Werkzeugaufnahmen kollidieren. Darüber hinaus kann die Verfahrbarkeit auch zur Durchführung des eigentlichen Werkzeugwechselvorganges mitgenutzt werden.

Die erfindungsgemäße Bearbeitungsvorrichtung besitzt den Vorteil, dass die Ausgestaltung des Werkzeugmagazins mit linear angeordneten Werkzeugaufnahmen ermöglicht, dass an mindestens zwei oder mehreren Spindeleinheiten das Ein- und Auswechseln der Werkzeuge jeweils simultan ausgeführt werden kann, wodurch die Werkzeugwechselzeiten gegenüber dem Stand der Technik beträchtlich vermindert werden.

Der Erfindung liegt weiter der Gedanke zugrunde, bei einer Spindeleinheit der eingangs genannten Art Haltemittel für die Längsfixierung von Werkzeugen in der Spindeleinheit bereitzustellen, die auch ohne mechanischen Eingriff dauerhaft und zuverlässig arbeiten. Zu diesem Zweck ist erfindungsgemäß vorgesehen, dass die Spindeleinheit magnetische Haltemittel aufweist, die in dem inneren Hohlraum angeordnet, mit dem Spindelkopf verbunden und dazu ausgelegt sind, eine vorbestimmte Haltekraft auf ein in dem Spindelkopf aufgenommenes Werkzeug aufzubringen.

Auf diese Weise werden Verschleißstellen, die bisher eine regelmäßige Wartung der Spindeleinheit erforderlich gemacht und eine Störungsquelle dargestellt haben, weitgehend beseitigt. Gleichzeitig ist für die Aktivierung der Haltekraft kein Einrastvorgang oder dergleichen erforderlich, wodurch das Ein- und Auswechseln der Werkzeuge deutlich vereinfacht wird.

Gemäß einer Weiterbildung der vorliegenden Erfindung weisen die magnetischen Haltemittel mindestens ein magnetisches Element auf, das auf der der Einführöffnung gegenüberliegenden Seite des Hohlraumes angeordnet ist. Auf diese Weise fügen sich die magnetischen Haltemittel auf besonders störungsarme Art in die Spindeleinheit ein, ohne dass die magnetischen Element mit der äußeren Umfangsfläche der jeweiligen, ein- und auszuwechselnden Werkzeuge in Berührung kommt. Hierdurch wird der Verschleiß weiter minimiert, während das Ein- und Auswechseln ebenfalls weiter vereinfacht wird.

Obgleich im Rahmen der vorliegenden Erfindung beliebige magnetische Haltemittel zum Einsatz kommen können, ist es gemäß einer Weiterbildung der Erfindung bevorzugt, dass die magnetischen Haltemittel mindestens ein magnetisches Element aufweisen, das zumindest abschnittsweise durch einen dauermagnetischen Werkstoff, insbesondere Samarium-Kobalt oder dergleichen, gebildet ist. Derartige dauermagnetische Werkstoffe zeichnen sich durch eine hohe magnetische Haltekraft bei geringen Abmessungen aus, sodass sie problemlos in das Innere einer Spindeleinheit integriert werden können, ohne dass an dieser erhebliche konstruktive Änderungen vorgenommen werden müssen.

Alternativ oder auch zusätzlich hierzu können die magnetischen Haltemittel gemäß einer Weiterbildung der vorliegenden Erfindung einen Elektromagneten aufweisen. Dieser ermöglicht beispielsweise eine Variation der magnetischen Haltekraft in Abhängigkeit von den Betriebsbedingungen oder auch während der Ein- und Auswechselvorgänge.

Die jeweiligen Werkzeuge können im Rahmen der vorliegenden Erfindung prinzipiell unmittelbar in die Spindeleinheit eingewechselt werden. Im Hinblick auf ein schnelles und sicheres Ein- und Auswechseln sowie Ablegen der Werkzeuge in einem Werkzeugmagazin ist gemäß einer Weiterbildung der vorliegenden Erfindung jedoch vorgesehen, dass ferner mindestens ein Adapter vorgesehen ist, der einen in den Spindelkopf ein- und auswechselbaren Schaft und eine Werkzeugaufnahme besitzt. Dabei ist besonders bevorzugt, dass der Adapter Festsetzmittel für ein darin aufgenommenes Werkzeug aufweist. Auf diese Weise kann ein Werkzeug dauerhaft fest mit dem Adapter verbunden werden, der wiederum entsprechend den jeweiligen Anforderungen gemeinsam mit dem Werkzeug in die jeweilige Spindeleinheit ein- und ausgewechselt oder gegebenenfalls in einem Magazin abgelegt wird. Zum Ablegen des Adapters in einem Werkzeugmagazin weist der Adapter gemäß einer Weiterbildung der Erfindung Anbringmittel, insbesondere eine Nut auf.

Dabei ist es besonders vorteilhaft, wenn das Werkzeugmagazin zwei Reihen mit linear angeordneten Werkzeugaufnahmen besitzt, die bevorzugt parallel zueinander angeordnet sind. Hierdurch können mehrere Gruppen parallel angeordneter Spindeleinheiten mit hoher Geschwindigkeit und hoher Zuverlässigkeit mit Werkzeugen versorgt werden.

Gemäß einer Weiterbildung der erfindungsgemäßen Bearbeitungsvorrichtung ist ferner vorgesehen, dass die Werkzeugaufnahmenanbringmittel, insbesondere einen Vorsprung, aufweisen, die zu den Anbringmitteln der jeweiligen Adapter komplementär sind. Hierdurch wird ein sicheres und schnelles Ablegen und Aufnehmen der Werkzeuge in bzw. aus dem Werkzeugmagazin sichergestellt.

### Kurze Beschreibung der Zeichnungen

Fig. 1 zeigt schematisch eine explosionsartige Perspektivansicht einer Spindeleinheit gemäß der vorliegenden Erfindung;
Fig. 2 zeigt schematisch eine teilweise geschnittene Seitenansicht einer Spindeleinheit gemäß der vorliegenden Erfindung;
Fig. 3 zeigt schematisch eine Perspektivansicht einer Bearbeitungsvorrichtung gemäß der vorliegenden Erfindung;
Fig. 4 zeigt schematisch eine Perspektivansicht einer weiteren Bearbeitungsvorrichtung gemäß der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

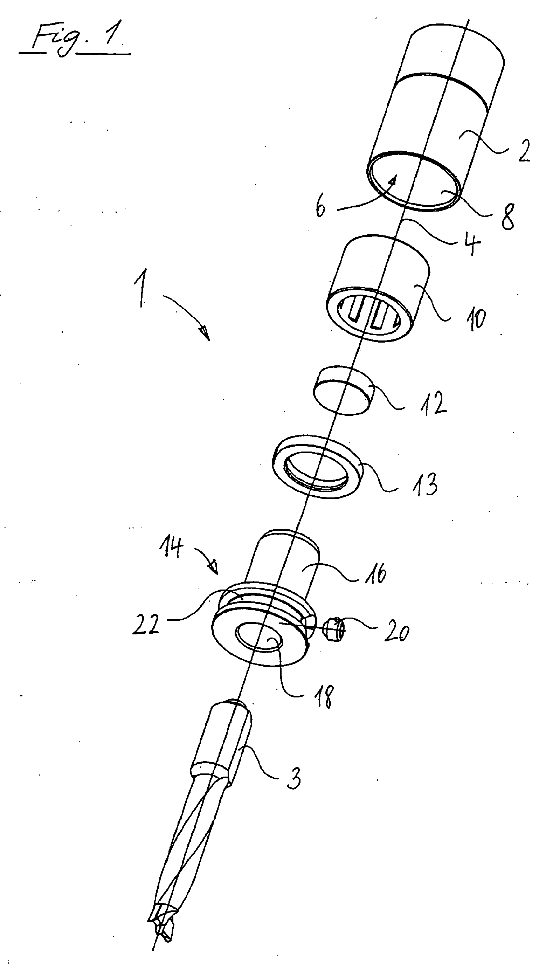

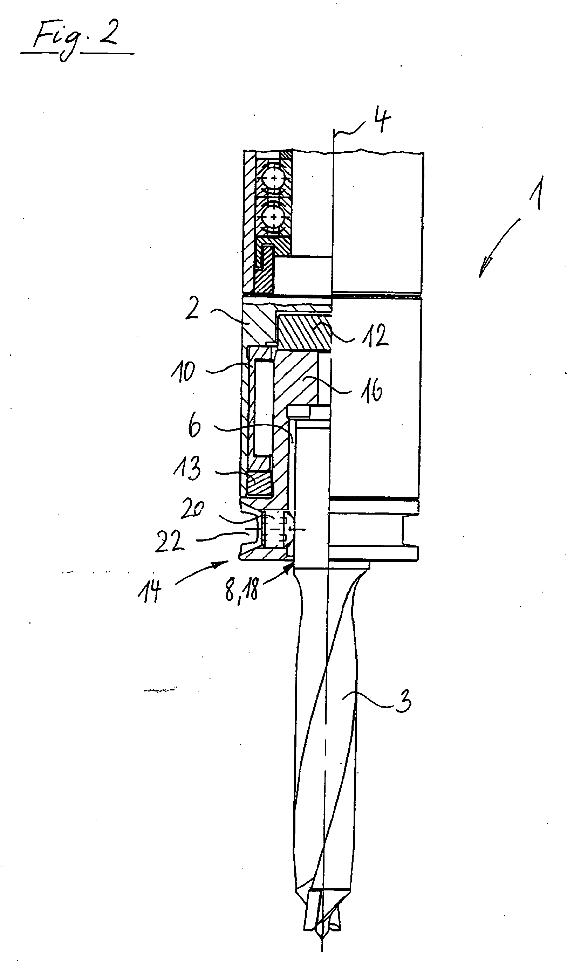

Eine erste Ausführungsform einer Spindeleinheit 1 gemäß der vorliegenden Erfindung ist in den Figuren 1 und 2 schematisch dargestellt. Die gezeigte Spindeleinheit 1 dient dazu, jeweils ein Werkzeug zur Bearbeitung von Werkstücken, die im Wesentlichen aus Holz, Holzwerkstoffen oder dergleichen bestehen, ein- und auswechselbar aufzunehmen. Sie umfasst einen Spindelkopf 2, der dazu ausgelegt ist, um eine Längsachse 4 herum durch einen hier nicht gezeigten Antrieb angetrieben zu werden, und einen inneren Hohlraum 6 mit einer Einführöffnung, die in Richtung der Längsachse 4 angeordnet ist.

Wie in Fig. 2 am besten zu erkennen ist, ist im Inneren des Hohlraums 6 ein Freilauf 10 angeordnet, der mit dem Spindelkopf 2 verbunden und dazu ausgelegt ist, ein Werkzeug 3 verdrehfest in einer vorbestimmten Drehrichtung um die Längsachse 4 herum aufzunehmen.

Oberhalb des Freilaufs 10 (betrachtet in Fig. 2) sind magnetische Haltemittel in Form eines magnetischen Elements (beispielsweise eines Flachgreifers) 12 angeordnet. Das magnetische Element 12 befindet sich somit auf der der Einführöffnung 8 gegenüberliegenden Seite des Hohlraums 6 und ist dazu ausgelegt, eine vorbestimmte Haltekraft auf ein in dem Spindelkopf 2 aufgenommenes Werkzeug 3 auszuüben.

Obgleich in der vorliegenden Ausführungsform ein einzelnes magnetisches Element 12 gezeigt ist, ist zu beachten, dass die magnetischen Haltemittel im Rahmen der vorliegenden Erfindung auch mehrteilig aufgebaut und an verschiedenen Stellen in der Spindeleinheit angeordnet sein können. Das mindestens eine magnetische Element 12 besitzt in der vorliegenden Ausführungsform einen Kern aus einem dauermagnetischen Werkstoff, wobei sich insbesondere Samarium-Kobalt oder dergleichen als besonders geeignet hierfür erwiesen hat. Alternativ hierzu ist es jedoch ebenso möglich, die magnetische Wirkung der magnetischen Haltemittel auch auf andere Weise zu erzeugen, beispielsweise unter Einsatz eines Elektromagneten.

Wie in Fig. 1 am besten zu erkennen ist, umfasst die Spindeleinheit 1 ferner einen Abstreifer 13, der dazu dient, die den Hülsenfreilauf 10 beim Einwechseln von Werkzeugen 3 bzw. Adaptern 14 vor Verschmutzungen zu schützen.

Obgleich die Spindeleinheit 1 im Rahmen der vorliegenden Erfindung dazu ausgelegt sein kann, unmittelbar ein Werkzeug 3 aufzunehmen, ist bei der vorliegenden Ausführungsform vorgesehen, dass die Werkzeuge 3 jeweils mit einem Adapter 14 verbunden werden, der einen in den Spindelkopf ein- und auswechselbaren Schaft 16 und eine Werkzeugaufnahme 18 für die jeweiligen Werkzeuge 3 besitzt. In diesem Falle muss die magnetische Anziehungskraft der magnetischen Haltemittel nicht unbedingt auf die einzelnen Werkzeuge wirken, sondern es genügt im Rahmen der vorliegenden Erfindung, dass die magnetische Anziehungskraft der magnetischen Haltemittel auf den jeweils eingewechselten Adapter 14 wirkt.

Der Adapter 14 kann im Rahmen der vorliegenden Erfindung vielfältig ausgestaltet sein. Wie in Fig. 2 am besten zu erkennen ist, besitzt er in der vorliegenden Ausführungsform Festsetzmittel 20 wie beispielsweise Schrauben oder dergleichen, um ein in den Adapter 14 aufgenommenes Werkzeug 3 festzusetzen. Darüber hinaus besitzt der Adapter 14 jeweils eine umlaufende Nut 22, die dazu dient, den Adapter sicher in einem noch zu beschreibenden Werkzeugmagazin 22 abzulegen.

Der Betrieb der erfindungsgemäßen Spindeleinheit vollzieht sich beispielsweise wie folgt. Zunächst wird ein einzuwechselndes Werkzeug 3 in einen zugehörigen Adapter 14 eingeführt und dort wird die Schraube 20 befestigt. Anschließend wird die Einheit aus Werkzeug 3 und Adapter 14 derart in den inneren Hohlraum 6 der Spindeleinheit eingeführt, dass der Schaft 16 des Adapters 14 in dem inneren Hohlraum zum Liegen kommt. Dabei ist die Endfläche des Schafts 16 dem magnetischen Element 12 zugewandt und kann gegebenenfalls auch an diesem anliegen. Hierdurch wird der Adapter 14 mit dem Werkzeug in Richtung der Achse 4 durch eine magnetische Anziehungskraft zwischen dem magnetischen Element 12 und dem Schaft 16 gehalten. Darüber hinaus ist eine äußere Umfangsfläche des Schafts 16 dem Freilauf 10 der Spindeleinheit 1 zugewandt.

Wird nun die Spindeleinheit durch einen nicht gezeigten Antrieb in Drehrichtung um die Achse 4 herum angetrieben, entsteht ein Eingriff zwischen dem Freilauf 10 und dem Schaft 16, sodass der Adapter 14 mit dem darin befindlichen Werkzeug 3 in Drehrichtung angetrieben wird, während er in Längsrichtung entlang der Achse 4 durch die magnetische Anziehungskraft zwischen dem magnetischen Element 12 und dem Schaft 16 bzw. dem Werkzeug 3 gehalten wird.

Nach Beendigung des Drehantriebs gibt der Freilauf 10 den Schaft 16 frei, sodass der Adapter 14 mit dem Werkzeug und der Überwindung der magnetischen Anziehungskraft zwischen dem magnetischen Element 12 und dem Schaft 16 bzw. dem Werkzeug 3 aus der Spindeleinheit 1 herausgezogen und gegebenenfalls durch einen anderen Adapter 14 mit Werkzeug ersetzt werden kann.

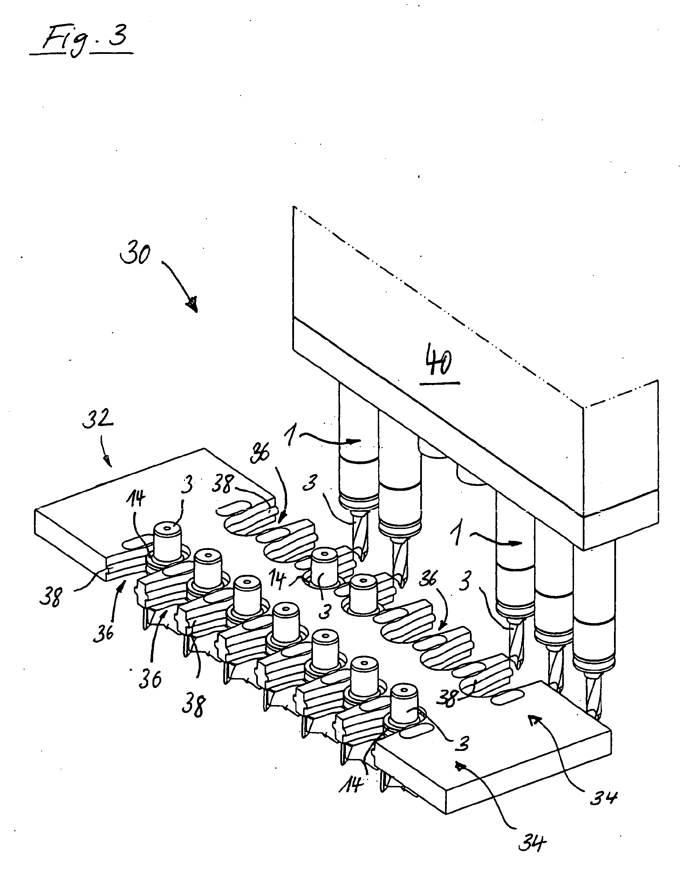

Eine Bearbeitungsvorrichtung 30 gemäß einer Ausführungsform der vorliegenden Erfindung ist schematisch in Fig. 3 in einer Perspektivansicht gezeigt. Die Bearbeitungsvorrichtung 30 umfasst in der vorliegenden Ausführungsform sieben Spindeleinheiten 1, wie sie obenstehend beschrieben worden sind. Diese sind in dem gemeinsamen Gehäuse 40 angeordnet, und sind einzeln oder gruppenweise innerhalb des Gehäuses in ihrer Längsrichtung zwischen einer ausgefahrenen Arbeitsstellung und einer eingefahrenen Ruhestellung verfahrbar, beispielsweise mittels eines Pneumatikantriebes.

Ferner umfasst die Bearbeitungsvorrichtung 30 ein Werkzeugmagazin 32, das eine Mehrzahl von Werkzeugaufnahmen 36 besitzt, die in der vorliegenden Ausführungsform in zwei sich linear erstreckenden Reihen 34 angeordnet sind. Die lineare Anordnung der Werkzeugaufnahmen 36 innerhalb der jeweiligen Reihe 34 besitzt den Vorteil, dass es prinzipiell möglich ist, an mehreren oder gegebenenfalls auch allen Spindeleinheiten 1 der Bearbeitungsvorrichtung 30 gleichzeitig einen Ein- oder Auswechselvorgang auszuführen.

Die Werkzeugaufnahmen 36 des Werkzeugmagazins 32 besitzen jeweils einen umlaufenden Vorsprung 38, der in seiner Geometrie zu der umlaufenden Nut 22 der jeweiligen Adapter 14 komplementär ist, sodass ein sicherer Eingriff des Adapters 14 in den Werkzeugaufnahmen 36 sichergestellt ist.

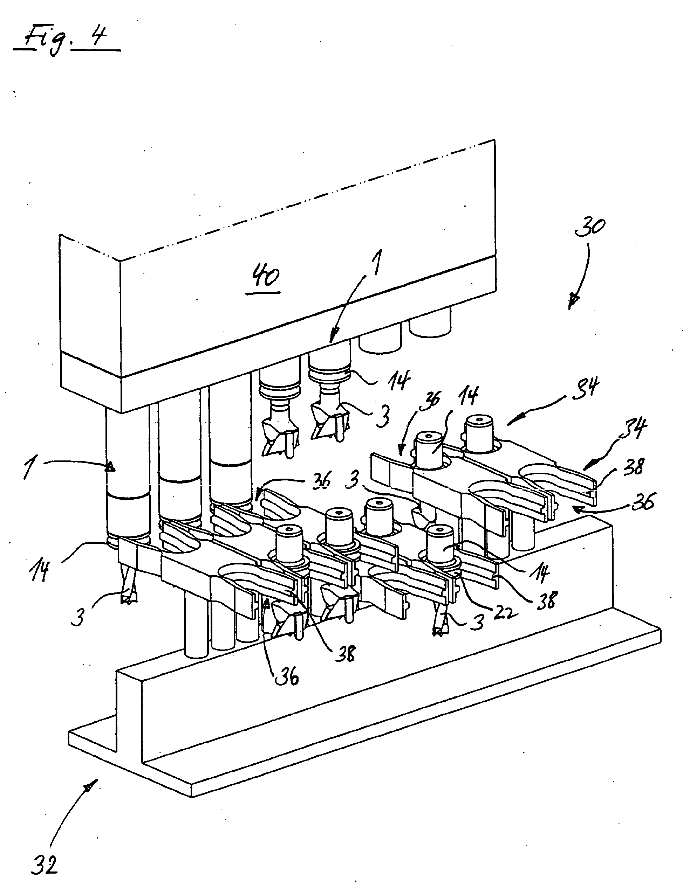

Eine alternative Ausführungsform der Bearbeitungsvorrichtung 30 ist in Fig. 4 schematisch in einer Perspektivansicht dargestellt. Diese unterscheidet sich von der in Fig. 3 gezeigten Ausführungsform dadurch, dass die Werkzeugaufnahmen 36 des Werkzeugmagazins 34 derart angeordnet sind, dass sie jeweils einzeln oder gruppenweise im Wesentlichen parallel zur Achse der zu haltenden Werkzeuge 3 verfahrbar sind. Hierdurch kann zunächst ein schnellerer Ein- und Auswechselvorgang erzielt werden.

Darüber hinaus kann jedoch auch, wie in Fig. 4 zu erkennen ist, beim Ein- bzw. Auswechseln der Werkzeuge 3 der ersten drei Spindeleinheiten 1 (gezählt von links in Fig. 4) eine Kollision der nachfolgenden Spindeleinheiten bzw. deren Werkzeuge mit den zugehörigen Werkzeugaufnahmen 36 verhindert werden, sodass der Betrieb der erfindungsgemäßen Bearbeitungsvorrichtung 30 insgesamt weniger störanfällig wird.

## Patentansprüche

1. Bearbeitungsvorrichtung (30) zur Bearbeitung von Werkstücken, die im Wesentlichen aus Holz, Holzwerkstoffen oder dergleichen bestehen, mit:
mindestens zwei Spindeleinheiten (1), wobei jede Spindeleinheit (1) zur ein- und auswechselbaren Aufnahme von Werkzeugen zur Bearbeitung von Werkstücken, die im Wesentlichen aus Holz, Holzwerkstoffen oder dergleichen bestehen, mit:
einem Spindelkopf (2) zur Aufnahme eines Werkzeugs (3), der dazu ausgelegt ist, um eine Längsachse (4) herum angetrieben zu werden und einen inneren Hohlraum (6) mit einer Einführöffnung (8) aufweist, die in Richtung der Längsachse (4) angeordnet ist,
mindestens einem Freilauf (10), der in dem Inneren Hohlraum (6) angeordnet, mit dem Spindelkopf (2) verbunden und dazu ausgelegt ist, ein Werkzeug (3) verdrehfest in einer vorbestimmten Drehrichtung aufzunehmen,
wobei die Bearbeitungseinrichtung weiter aufweist:
ein Werkzeugmagazin (32), mittels dessen Werkzeuge (3) automatisch in die Spindeleinheit (1) ein- und auswechselbar sind, wobei das Werkzeugmagazin (32) mindestens eine Reihe (34) mit linear angeordneten Werkzeugaufnahmen (36) besitzt, **dadurch gekennzeichnet, dass** jede Spindeleinheit magnetische Haltemittel (12) umfasst, die in dem inneren Hohlraum (6) angeordnet, mit dem Spindelkopf (2) verbunden und dazu ausgelegt sind, um eine vorbestimmte Haltekraft auf ein in dem Spindelkopf (2) aufgenommenes Werkzeug (3) aufzubringen, und **dadurch**, dass die Werkzeugaufnahmen (36) im Wesentlichen parallel zur Achse der zu haltenden Werkzeuge (3) verfahrbar sind.

2. Bearbeitungsvorrichtung nach Anspruch 1, **dadurch gekennzeichnet, dass** die magnetischen Haltemittel mindestens ein magnetisches Element (12) aufweisen, das auf der der Einführöffnung (8) gegenüberliegenden Seite des Hohlraumes (6) angeordnet ist.

3. Bearbeitungsvorrichtung nach Anspruch 1 oder 2, **dadurch gekennzeichnet, dass** die magnetischen Haltemittel mindestens ein magnetisches Element (12) aufweisen, das zumindest abschnittsweise durch einen dauermagnetischen Werkstoff, insbesondere Samarium-Cobalt oder dergleichen, gebildet ist.

4. Bearbeitungsvorrichtung nach einem der vorhergehenden Ansprüche, **dadurch gekennzeichnet, dass** die magnetischen Haltemittel einen Elektromagneten aufweisen.

5. Bearbeitungsvorrichtung nach einem der vorhergehenden Ansprüche, **dadurch gekennzeichnet, dass** sie ferner mindestens einen Adapter (14) aufweist, der einen in den Spindelkopf ein-und auswechselbaren Schaft (16) und eine Werkzeugaufnahme (18) besitzt.

6. Bearbeitungsvorrichtung nach Anspruch 5, **dadurch gekennzeichnet, dass** der Adapter (14) Festsetzmittel (20) für ein darin aufgenommenes Werkzeug (3) besitzt.

7. Bearbeitungsvorrichtung nach Anspruch 5 oder 6, **dadurch gekennzeichnet, dass** der Adapter (14) Anbringmittel, insbesondere eine Nut (22), zum Ablegen des Adapters in einem Werkzeugmagazin (32) besitzt.

8. Bearbeitungsvorrichtung nach Anspruch 1, **dadurch gekennzeichnet, dass** das Werkzeugmagazin (32) zwei Reihen (34) mit linear angeordneten Werkzeugaufnahmen (36) besitzt, die bevorzugt parallel oder orthogonal zueinander angeordnet sind.

9. Bearbeitungsvorrichtung nach Anspruch 1 oder 8, **dadurch gekennzeichnet, dass** die Werkzeugaufnahmen (36) Anbringmittel (38), insbesondere einen Vorsprung, aufweisen, die zu den Anbringmitteln (22) der jeweiligen Adapter (14) komplementär sind.

## Claims

1. Machining device (30) for machining workpieces which consist essentially of wood, derived timber products or the like, having:
at least two spindle units (1), wherein each spindle unit (1) for changeable and exchangeable receiving of tools for machining workpieces which consist essentially of wood, derived timber products or the like, having:
a spindle head (2) for receiving a tool (3) which is designed to be driven about a longitudinal axis (4) and an inner cavity (6) with an introduction opening (8) which is arranged in the direction of the longitudinal axis (4),
at least one free-wheel (10), which is arranged in the interior of the cavity (6), is connected to the spindle head (2) and designed to receive a tool (3) to be resistant to rotation in a predetermined direction of rotation,
wherein the machining device also has:
a tool magazine (32), by means of which tools (3) can be changed and exchanged into the spindle unit (1) automatically, wherein the tool magazine (32) has at least one row (34) with linearly arranged tool mountings (36), **characterised in that** each spindle unit comprises retaining means (12) which are arranged in the inner cavity (6), connected to the spindle head (2) and designed to apply a predetermined retaining force to a tool (3) received in the spindle head (2), and **in that** the tool mountings (36) can be moved essentially parallel to the axis of the tools (3) to be retained.

2. Machining device according to claim 1, **characterised in that** the magnetic retaining means have at least one magnetic element (12), which is arranged on the side of the cavity (6) which is opposite the introduction opening (8).

3. Machining device according to claim 1 or 2, **characterised in that** the magnetic retaining means have at least one magnetic element (12), which is formed at least in sections by a permanent-magnetic material, in particular samarium-cobalt or the like.

4. Machining device according to one of the preceding claims, **characterised in that** the magnetic retaining means have an electromagnet.

5. Machining device according to one of the preceding claims, **characterised in that** it also has at least one adapter (14), which has a shaft which can be changed and exchanged into the spindle head and a tool mounting (18).

6. Machining device according to claim 5, **characterised in that** the adapter (14) has fixing means (20) for a tool (3) received therein.

7. Machining device according to claim 5 or 6, **characterised in that** the adapter (14) has attachment means, in particular a groove (22), for placing the adapter in a tool magazine (32).

8. Machining device according to claim 1, **characterised in that** the tool magazine (32) has two rows (34) with linearly arranged tool mountings (36), which are preferably arranged parallel or orthogonal to one another.

9. Machining device according to claim 1 or 8, **characterised in that** the tool mountings (36) have attachment means (38), in particular a projection, which are complementary to the attachment means (22) of the particular adapter (14).

## Revendications

1. Dispositif d'usinage (30) pour l'usinage de pièces d'oeuvre, composées essentiellement de bois, de matériaux ligneux ou analogue, avec :
au moins deux unités de broche (1), chaque unité de broche (1) étant prévue pour recevoir, en permettant un changement par introduction et extraction, des outils pour l'usinage de pièces d'oeuvre composées essentiellement de bois, de matériaux ligneux ou analogue, avec :
une tête de broche (2), pour recevoir un outil (3), conçu pour être entraîné autour d'un axe longitudinal (4) et présentant un espace creux intérieur (6) avec une ouverture d'insertion (8), disposée en direction de l'axe longitudinal (4),
au moins une roue libre (10), disposée dans l'espace creux intérieur (6), reliée à la tête de broche (2) et conçue pour recevoir un outil (3) de manière assujettie en rotation dans un sens de rotation prédéterminé,
le dispositif d'usinage présentant en outre :
un magasin à outils (32), au moyen duquel des outils (3) sont susceptibles d'être changés automatiquement par introduction et extraction dans l'unité de broche (1), le magasin à outils (32) comprenant au moins une série de logements à outils (36) disposés de façon linéaire, **caractérisé en ce que** chaque unité à broche comprend des moyens de maintien (12) magnétiques, disposés dans l'espace creux intérieur (6), reliés à la tête de broche (2) et conçus pour appliquer une force de maintien prédéterminée sur un outil (3) logé dans la tête de broche (2) et, de ce fait, que les logements à outils (36) soient déplaçables de façon sensiblement parallèle à l'axe de l'outil (3) à maintenir.

2. Dispositif d'usinage selon la revendication 1, **caractérisé en ce que** les moyens de maintien magnétiques présentent au moins un élément magnétique (12), disposé sur le côté, opposé à l'ouverture d'insertion (8), de l'espace creux (6).

3. Dispositif d'usinage selon la revendication 1 ou 2, **caractérisé en ce que** les moyens de maintien magnétiques présentent au moins un élément magnétique (12), formé, au moins par tronçons, d'un matériau à magnétisme permanent, en particulier du samarium-cobalt ou analogue.

4. Dispositif d'usinage selon l'une des revendications précédentes, **caractérisé en ce que** les moyens de maintien magnétiques présentent au moins un électroaimant.

5. Dispositif d'usinage selon l'une des revendications précédentes, **caractérisé en ce qu'**il présente en outre au moins un adaptateur (14) comprenant une tige (16), susceptible d'être changée par introduction et extraction dans la tête de broche, et un logement à outil (18).

6. Dispositif d'usinage selon la revendication 5, **caractérisé en ce que** l'adaptateur (14) comprend des moyens de blocage (20) pour un outil (3) y étant logé.

7. Dispositif d'usinage selon la revendication 5 ou 6, **caractérisé en ce que** l'adaptateur (14) comprend des moyens de montage, en particulier une rainure (22), pour déposer l'adaptateur dans un magasin à outil (32).

8. Dispositif d'usinage selon la revendication 1, **caractérisé en ce que** le magasin à outil (32) comprend deux rangées (34) munies de logements à outil (36) disposés de façon linéaire, disposés de préférence parallèlement ou perpendiculairement entre eux.

9. Dispositif d'usinage selon la revendication 1 ou 8, **caractérisé en ce que** les logements à outil (36) présentent des moyens de montage (38), en particulier une saillie, complémentaires des moyens de montage (22) de l'adaptateur (14) respectif.
